# EUROPÄISCHE PATENTANMELDUNG

(11) **EP 1 333 005 A1**
(43) Veröffentlichungstag der Anmeldung: **06.08.2003**
(21) Anmeldenummer: 03002071.3
(22) Anmeldetag: 29.01.2003
(51) Int. Cl.: B67D 1/00, F16K 11/076, B01F 15/04

(54) **Mischvorrichtung**

(30) Priorität: 01.02.2002 DE 10204051; 02.07.2002 DE 10229654
(71) Anmelder: Aqamore GmbH, 32425 Minden (DE)
(72) Erfinder: Finke, Robert, 32312 Lübbecke (DE); Braun, Wolfgang, 21244 Buchholz i. d. Nordheide (DE)
(74) Vertreter: Grünecker, Kinkeldey, Stockmair & Schwanhäusser Anwaltssozietät

(57) **Zusammenfassung**

Es wird eine Mischvorrichtung (5,105,205) für Fluide, insbesondere für ein Getränke-Zapfventil (1,100), beschrieben, die konstruktiv so einfach und mit wenigen Teilen aufgebaut ist, dass sie leicht zu reinigen ist. Zu diesem Zweck enthält die Mischvorrichtung eine Fluidkammer (9,209) mit einer ersten Einlassöffnung (6a,206a) für ein erstes Fluid und einer zweiten Öffnung (7a,207a) für ein zweites Fluid, einen zwischen der ersten und der zweiten Einlassöffnung in der Fluidkammer bewegbaren Mischkörper (10,110,210,310,410) und einen Auslass (9a,209a) für Mischfluid. Der Mischkörper ist mit einem Abdeckbereich (B) für die erste und die zweite Einlassöffnung versehen. Der Abdeckbereich ist so ausgebildet, dass während einer ersten Bewegungsphase des Mischkörpers die erste Einlassöffnung zunehmend abgedeckt und die zweite Einlassöffnung zunehmend geöffnet und während einer zweiten Bewegungsphase des Mischkörpers die erste Einlassöffnung zunehmend geöffnet und die zweite Einlassöffnung zunehmend abgedeckt wird.

## Beschreibung

Die Erfindung bezieht sich auf eine Mischvorrichtung, die insbesondere für Getränke-Zapfhähne geeignet ist.

Der Verbrauchergeschmack tendiert zunehmend zu Mischgetränken, beispielsweise Fruchtsäfte gemischt mit karbonisiertem Wasser (Fruchtschorle), Bier gemischt mit Limonade oder karbonisiertes Wasser gemischt mit nicht karbonisiertem Wasser zum Einstellen des Gasgehaltes (stilles oder sprudelndes Wasser), Wasser versetzt mit Kohlendioxyd und Wasser versetzt mit Sauerstoff, usw. Es wäre für den Ausschank von großem Vorteil, wenn diese Mischungen direkt beim Zapfen des Getränkes vorgenommen werden könnten, und nicht, wie dies bislang überwiegend geschieht, die zu mischenden Getränke nacheinander in ein und dasselbe Glas gezapft und dabei gemischt werden. In der WO90/15275 ist eine Mischvorrichtung beschrieben, die speziell an das Mischen zweier Wässer mit unterschiedlichem Kohlendioxydgehalt angepasst ist. Die bekannten Mischvorrichtung enthält zwei Einlassleitungen, die in eine gemeinsame Mischkammer münden. In jeder der Einlassleitungen ist jeweils ein Rückschlagventil und ein Nadelventil, beaufschlagt durch Federn, angeordnet. Das Nadelventil in jeder Einlaufleitung ist zum Einstellen des Mischverhältnisses verstellbar. Die Verstellung muss jedoch mit Hilfe eines Schraubenziehers geschehen, so dass ein einmal eingestelltes Mischungsverhältnis nicht leicht geändert werden kann. Alle mit Getränken und Lebensmitteln insgesamt in Berührung kommenden Bauteile müssen jedoch in regelmäßigen Abständen gereinigt werden. Ob die bekannte Mischvorrichtung zum Reinigen demontierbar ist, ist nicht beschrieben. Aber selbst wenn sie demontierbar wäre, wäre sie durch ihre Vielzahl von Bauteilen durch einen ungeübten Benutzer nicht mehr zusammenzusetzen.

Der Erfindung liegt somit die Aufgabe zugrunde, eine konstruktiv einfache und gut zu reinigende Mischvorrichtung zu schaffen.

Diese Aufgabe wird durch die im Anspruch 1 angegebenen Merkmale gelöst.

Die erfindungsgemäße Mischvorrichtung kommt ohne komplizierte Ventile aus, und benötigt lediglich einen zwischen den Einlassöffnungen für die unterschiedlichen Fluide bewegbaren Mischkörper, wobei dieser Mischkörper durch unterschiedliche Grade der Abdeckung jeder der Einlassöffnungen das Mischungsverhältnis einstellt. Die Mischung der Fluide erfolgt dynamisch, d.h. während des Ausgabevorgangs der Mischung.

Vorteilhafte Weiterbildungen der Erfindung sind den Unteransprüchen zu entnehmen.

Ein Ausführungsbeispiel der Erfindung wird nachfolgend anhand der Zeichnungen näher erläutert. Es zeigen:
- Fig. 1: eine schematische Darstellung eines erfindungsgemäßen Zapfventils mit Mischvorrichtung,
- Fig. 2: ein herausvergrößertes Detail der Mischvorrichtung nach Fig. 1,
- Fig. 3: ein Mischkörper einer Mischvorrichtung nach Fig. 1 in einer ersten Ansicht,
- Fig. 4: der Mischkörper aus Fig. 3 in einer zweiten Ansicht,
- Fig. 5: eine schematische Darstellung eines weiteren Ausführungsbeispiels eines erfindungsgemäßen Zapfventils,
- Fig. 6: eine schematische Darstellung einer weiteren Mischvorrichtung,
- Fig. 7: eine schematische Darstellung eines weiteren Mischkörpers, und
- Fig. 8: eine schematische Darstellung eines weiteren Mischkörpers.

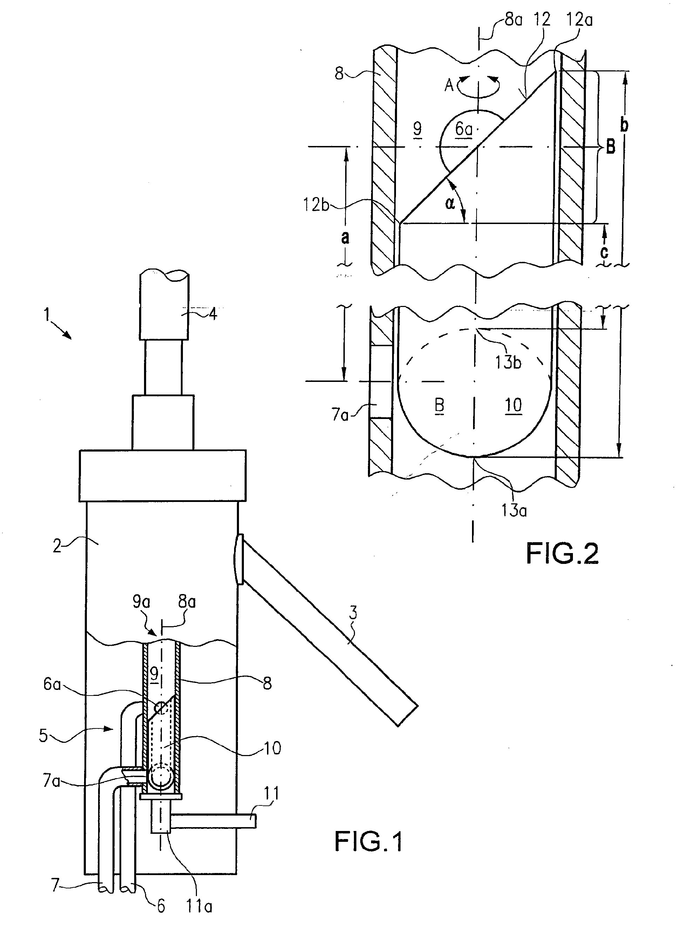

Die Fig. 1 und 2 zeigen in schematischer Darstellung ein insgesamt mit 1 bezeichnetes Zapfventil, wie es zum Zapfen von Getränken in Gaststätten und Restaurants üblich ist. Das Zapfventil 1 enthält ein Gehäuse 2 mit einem Getränkeauslauf 3 und einem nur teilweise gezeigten Handhebel 4, mit dem eine herkömmliche, nicht gezeigte Absperrarmatur im Inneren des Gehäuses 2 zum Öffnen und Schließen des Getränkeauslaufs 3 betätigt werden kann.

Im Gehäuse 2 ist eine Mischarmatur oder Mischvorrichtung 5 untergebracht, die über zwei Zufuhrleitungen 6 und 7 mit zwei unterschiedlichen Fluiden, im vorliegenden Fall Getränke oder Getränkerohstoffe in Flüssigkeitsform, versorgt wird.

Die Mischvorrichtung 5 enthält eine durch eine Umfangswandung 8 begrenzte Fluidkammer 9, in die mit einer ersten Einlassöffnung 6a die erste Leitung 6 und mit einer zweiten Einlassöffnung 7a die zweite Leitung 7 einmündet.

Die Wandung 8 ist zylindrisch ausgebildet, mit senkrechter Achse 8a im Gehäuse angeordnet und enthält sowohl die Fluidkammer 9 als auch einen Auslass 9a. Dabei münden die Einlassöffnungen 6a, 7a in einem axialen Abstand zueinander bezüglich der Mittelachse 8a und der Auslass 9a erstreckt sich durch eine Stirnseite der Fluidkammer 9. Der Auslass 9a ist mit der nicht gezeigten Absperrarmatur im Inneren des Gehäuses 2 verbunden.

Von der in Fig. 1 unteren Stirnseite her ist in die Fluidkammer 9 ein Mischkörper 10 lösbar eingesetzt. Der Mischkörper 10 ist über einen aus dem Gehäuse 2 herausragenden Handgriff 11 in der Fluidkammer 9 um die Achse 8a zum Verändern des Mischungsverhältnisses der durch die entsprechenden Einlassöffnungen 6a und 7a strömenden Fluide verschwenkbar.

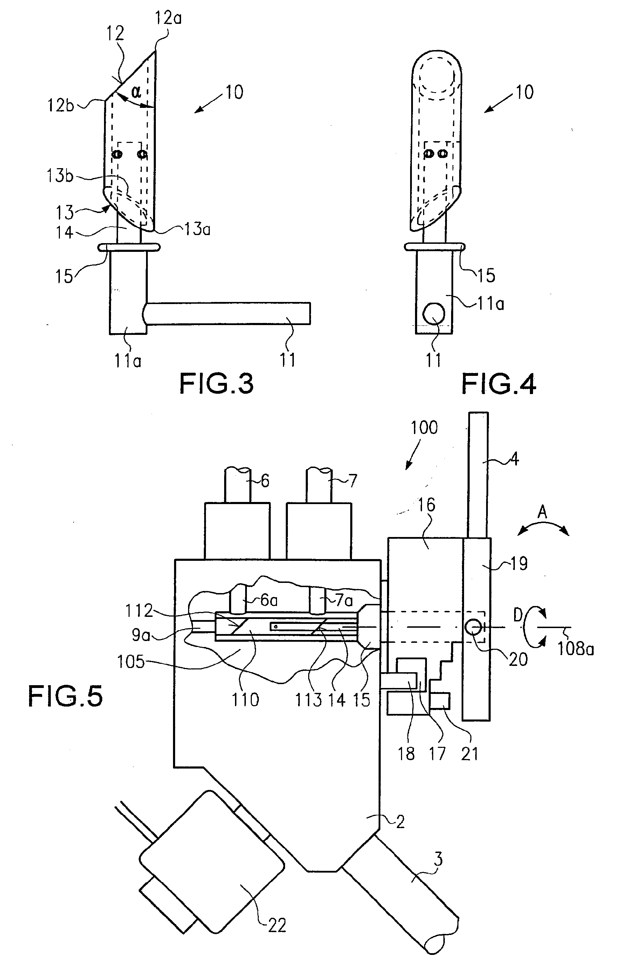

Wie insbesondere die Fig. 3 und 4 zeigen, ist der Mischkörper 10 als zylindrisches Rohrstück mit abgeschrägten, ebenen Stirnflächen 12 bzw. 13 ausgebildet. Der Handgriff 11 ist bevorzugt lösbar in ein Griffteil 11a eingesteckt und über einen Befestigungsstift 14, dessen Außendurchmesser kleiner ist als der Innendurchmesser des rohrförmigen Mischkörpers 10, im Inneren des Mischkörpers 10 befestigt. Der Befestigungsstift 14 endet bevorzugt in einer als Anschlag dienenden Abdichtmanschette 15 für die untere, offene Stirnfläche der Fluidkammer 9. Der Mischkörper 10 mit dem Befestigungsstift 14, der Abdichtmanschette 15 und dem Griffstück 11a bildet somit eine Einheit, die einfach von einer Stirnseite her in die zylindrische Wandung 8 eingesetzt werden kann.

Die unter einem gleich großen Winkel α von bevorzugt 45° abgeschrägten Stirnseiten 12, 13 des Mischkörpers 10 bilden einen ersten, hohen Umkehrpunkt 12a bzw. 13a und einen zweiten, tiefen Umkehrpunkt 12b bzw. 13b, die in Fig. 2 näher dargestellt sind. In der Darstellung in Fig. 2 münden die Mittellinien der Einlassöffnungen 6a, 7a mit einem Abstand a entlang der Mittelachse 8a in die Fluidkammer 9. Weiterhin sind die Mittellinien der Einlassöffnungen 6a, 7a mit einem Winkelabstand von 90° um die Mittellinie 8a gegeneinander versetzt. Demgemäß sind die ersten, hohen Umlenkpunkte 12a, 13a der schrägen Stirnflächen 12 und 13 sowie ihre zweiten, tiefsten Umlenkpunkte 12b, 13b um jeweils ebenfalls 90° um die Mittelachse 8a gegeneinander versetzt. Der axiale Abstand b zwischen den ersten, höchsten Umlenkpunkten 12a, 13a ist größer als der Abstand a zwischen den Einlassöffnungen 6a, 7a, und zwar mindestens um die Summe der halben Durchmesser beider Einlassöffnungen 6a, 7a. Der axiale Abstand c zwischen den tiefsten Umlenkpunkten 12b, 13b ist kleiner als der Abstand a, und zwar bevorzugt um mindestens die Summe der halben Durchmesser der beiden Einlassöffnungen 6a, 7a. Der Befestigungsstift 14 und die Dichtmanschette 15 sind so angeordnet, dass der Mischkörper 10 im Abstand a mittig zu den Einlassöffnungen 6a, 7a ausgerichtet ist. Wird nun der Mischkörper 10 entlang des Doppelpfeiles A um die Achse 8a verdreht, so überdecken die Begrenzungskanten der schrägen Stirnflächen 12 bzw. 13 graduell zunehmend bzw. graduell abnehmend die jeweils anliegende Einlassöffnung 6a bzw. 7a, wobei der Umfangsbereich B des Mischkörpers 10 zumindest zwischen jeweils den beiden Umlenkpunkten 12a und 12b bzw. 13a und 13b als Abdeckbereich B zum vollständigen oder teilweisen Abdekken der jeweils anliegenden Einlassöffnung 6a und 7a dient.

Im dargestellten Ausführungsbeispiel ist der Winkelabstand zwischen den Einlassöffnungen 6a, 7a um die Mittelachse 8a gleich dem Winkelabstand zwischen den jeweils höchsten Umlenkpunkten 12a und 13a bzw. den jeweils tiefsten Umlenkpunkten 12b, 13b, die Öffnungsquerschnitte der Einlassöffnungen 6a, 7a gleich groß und der Mischkörper 10 symmetrisch zu den Einlassöffnungen 6a, 7a angeordnet, so das beide Einlassöffnungen 6a, 7a gleich behandelt werden, d.h. weder die Strömung aus der ersten Einlassleitung 6 noch die Strömung aus der zweiten Einlassleitung 7 bevorrechtet wird.

Zum Vergleich ist in den Fig. 3 und 4 ein konstruktiv abweichender Mischkörper 10 gezeigt, dessen Schrägflächen 12 und 13 so angeordnet sind, dass ihre Umlenkpunkte um einen von 90° verschiedenen Winkel um die Drehachse 8a zueinander versetzt sind. Sind dann die zugeordneten Einlassöffnungen 6a, 7a um den gleichen Winkel zueinander versetzt, so ergibt sich wieder eine gleichberechtigte Behandlung der beiden Einlassöffnungen. Haben die Einlassöffnungen 6a, 7a einen abweichenden Winkelversatz, so wird einer der beiden Einlassöffnungen 6a, 7a bevorrechtet, so dass auf diese Weise das gewünschte Mischungsverhältnis bei Mischvorgängen besser einstellbar ist, bei denen von vornherein feststeht, dass von einem Fluid aus einer der Einlassleitungen 6 oder 7 ein größerer oder kleinerer Anteil benötigt wird.

Auch der Winkel α kann zu diesem Zweck verändert werden und muss nicht unbedingt, wie dargestellt, 45° betragen.

Beim Zapfen von Getränken kann die Bedienperson über den Handhebel 11 auf einfache Weise das Mischungsverhältnis der beiden durch die Einlassöffnungen 6a, 7a in die Fluidkammer 9 eintretenden Getränke einstellen. Zweckmäßigerweise ist der Handhebel 11 nur über einen begrenzten Winkelbereich verschwenkbar, der durch einen Schlitz im Gehäuse 2 definiert wird. Anfang und Ende des Schlitzes könnten beispielsweise so definiert sein, dass bei Stellung des Handhebels 11 an einem dieser Endbereiche eine der Einlassöffnungen 6a, 7a vollständig verschlossen und die andere vollständig offen ist. Zwischenstellungen können dann je nach Geschmack des Verbrauchers eingestellt und gegebenenfalls durch ihre spezielle Stellung des Handhebels 11 markiert werden. Wird dann bei der Bewegung des Handhebels 4 die Absperrarmatur zum Getränkeauslauf 3 geöffnet, so fließt das Fluid aus der Auslassöffnung 7a durch das Innere des rohrförmigen Mischkörpers 10 hindurch, mischt sich mit dem Fluid aus der Auslassöffnung 6a und wird in gemischter Form durch den Getränkeauslauf 3 ausgegeben.

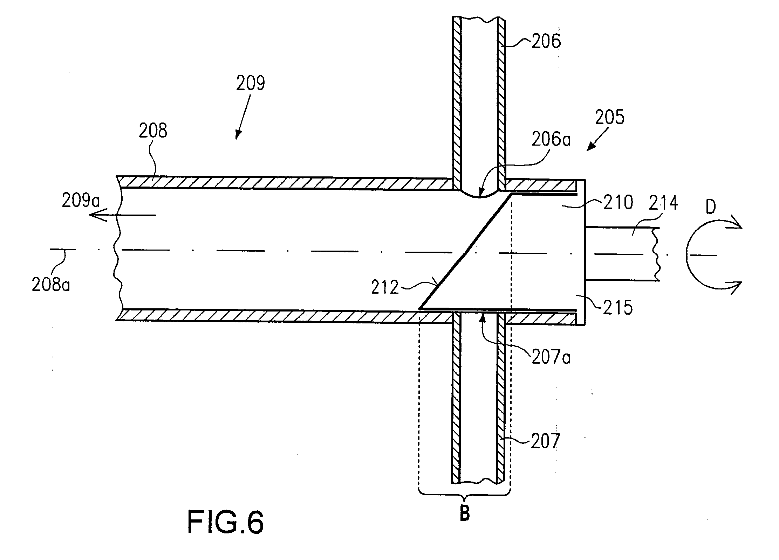

Fig. 5 zeigt ein weiteres Ausführungsbeispiel eines erfindungsgemäß ausgerüsteten Getränke-Zapfhahns 100. Der Zapfhahn 100 enthält eine erfindungsgemäße Mischvorrichtung 105, die sich von der Mischvorrichtung 5 der vorangegangenen Ausführungsbeispiele lediglich durch einen Mischkörper 110 mit parallel zueinander verlaufenden Stirnflächen 112 und 113 unterscheidet, der mit horizontal verlaufender Achse 108a, d.h. liegend, eingebaut ist. In Fig. 5 sind gleiche bzw. vergleichbare Bauteile aus den vorangegangenen Figuren mit den gleichen Bezugszeichen gekennzeichnet und nicht nochmals erläutert. Der Befestigungsstift 14 der Mischvorrichtung 105 ist mit einem Abdichtstopfen 15 im Gehäuse 2 des Zapfhahns 100 so gelagert, dass der Mischkörper 110 und der Befestigungsstift 14 mit dem Abdichtstopfen 15 als Einheit zum Reinigen aus dem Gehäuse 2 herausgenommen werden können. Mit dem Abdichtstopfen 15 ist ein Zapfsockel 16, der mit dem Zapfhandgriff 4 verbunden ist, derart gekoppelt, dass der Betätigungsstift 14 mit dem Mischkörper 110 um die Achse 108a verdreht wird, wenn der Zapfhebel 4 entlang des Doppelpfeils D in einer sich senkrecht zur Zeichnungsebene der Fig. 5 erstreckenden Ebene verschwenkt wird. Im Zapfsockel 16 ist eine sich über einen vorbestimmten Winkelbereich um die Achse 109a erstreckende Führung 17 ausgearbeitet, in der ein fest mit dem Gehäuse 2 verbundener Anschlagstift 18 läuft, wobei die Winkelerstreckung der Führung 17 um die Achse 108a den Verschwenkbereich des Mischkörpers 110 begrenzt.

Der Zapfhebel 4 ist weiterhin mit einem Betätigungshebel 19 verbunden, der um eine Achse 20 in Richtung des Doppelpfeiles A verschwenkbar ist. Die Schwenkachse 20 erstreckt sich senkrecht zur Zeichnungsebene der Fig. 5 und schneidet die Drehachse 108a. Beim Verschwenken des Betätigungshebels 19 in Fig. 5 nach rechts wird ein Kontaktstift 21 zunächst berührt und zunehmend weiter nach innen gepresst, wobei die Bewegung des Kontaktstiftes 21 auf üblichem, elektronischem Wege, beispielsweise über ein Solennoid 22 zum Steuern eines im Inneren des Gehäuses 2 untergebrachten, nicht gezeichneten, üblichen Absperrventils verwendet wird, das zwischen dem Auslass 9a und dem Getränkeauslauf 3 zwischengeschaltet wird. Die Steuerung erfolgt derart, dass das Ventil desto stärker geöffnet wird, je weiter der Zapfhebel 4 ausgeschwenkt, d.h. in Fig. 5 nach rechts bewegt wird.

Der Zapfhahn 100 in Fig. 5 kann somit einerseits, durch Drehen des Zapfhebels 4 in einer Ebene senkrecht zur Zeichnungsebene, das Mischungsverhältnis der aus den Leitungen 6 und 7 zulaufenden Getränke bestimmen und darüber hinaus durch Verschwenken des Zapfhebels 4 in Richtung des Pfeiles A die aus den Getränkeauslauf 3 auslaufende Menge des Mischgetränkes bestimmen.

Fig. 6 zeigt ein weiteres Ausführungsbeispiel einer erfindungsgemäßen Mischvorrichtung 205, die ähnlich wie die oben beschriebenen Mischvorrichtungen in Zapfventile eingebaut und z.B. durch einen Zapfhebel in Einhand-Bedienung zum Mischen und Zapfen betätigt werden kann. Ein derartiges Zapfventil ist in der DE 102 29 651 mit gleichem Zeitrang beschrieben, auf die hiermit Bezug genommen wird. Die Mischvorrichtung 205 enthält eine Fluidkammer 209, die von einer Wandung 208 umgeben ist, durch die sich eine erste Einlassleitung 206 und eine zweite Einlassleitung 207 erstrecken. Die Wandung 208 ist im Wesentlichen zylindrisch mit einer Mittellinie 208a ausgebildet, und die Ausmündungen 206a bzw. 207a der beiden Einlassleitungen 206, 207 münden an diametral gegenüberliegenden Stellen in die Fluidkammer 209 ein. Die Einlassleitungen 207 sind zweckmäßigerweise mit Rückschlagventilen versehen, die eine Strömung von der Fluidkammer 209 zurück in die Einlassleitungen 206, 207 sperren.

In der Fluidkammer 209 ist von einer Stirnseite her ein Mischkörper 210 eingesetzt, der mit einem Abdichtstopfen 215 versehen und um die Achse 208a in Richtung des Doppelpfeiles D und mit Hilfe eines Betätigungsstiftes 214 verdrehbar ist. Der zylindrisch ausgebildete Mischkörper 210 weist eine in die Fluidkammer 209 reichende, freie Stirnseite auf, die eine durchgehende, den Querschnitt der Fluidkammer 209 ausfüllende Stirnfläche 212 bildet, die sich im Winkel schräg zur Drehachse 208a erstreckt. Die Bemessungen der höchsten und tiefsten Punkte der Stirnfläche 212 entspricht dem bereits beschriebenen Ausführungsbeispiel und wird nicht nochmals erläutert. Der Umfang des zylindrischen Mischkörpers 210, anschließend an die Stirnfläche 212 wirkt somit als Abdeckbereich, der beim Verdrehen des Mischkörpers 210 in Richtung des Doppelpfeiles D um die Achse 208 aufeinanderfolgend entweder die Einlassöffnung 206 oder die Einlassöffnung 207 zunehmend abdeckt und die jeweils andere Einlassöffnung zunehmend freilegt, so dass sich die aus den Einlassöffnungen 206 und 207 stammenden Fluide mischen. Der Auslass erfolgt hier nicht durch den Mischkörper 210 sondern allein über die entgegengesetzte Stirnseite der Fluidkammer 209.

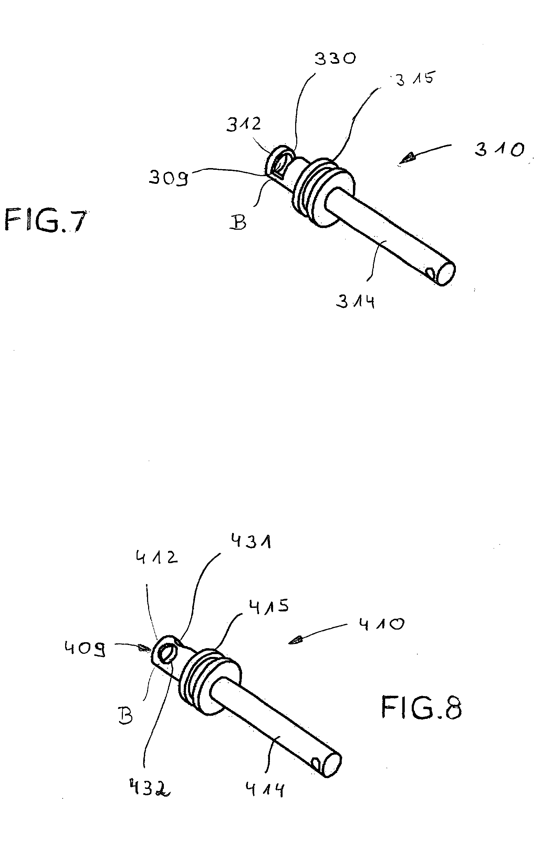

Fig. 7 zeigt ein weiteres Ausführungsbeispiel eines Mischkörpers 310 für eine erfindungsgemäße Mischvorrichtung. Der Mischkörper 310 kann in ähnlicher Weise wie beispielsweise der Mischkörper 210 in Fig. 6 eingesetzt werden und enthält ebenfalls einen Abdichtstopfen 315 und einen Betätigungsstift 314. Der Mischkörper 310 weist in der Nähe einer freien, radial verlaufenden Stirnfläche 312 eine sich über einen vorbestimmten Umfangswinkel um den zylindrischen Mischkörper erstreckende Nut 330 auf, die den Abdeckbereich B begrenzt. Der Winkelbereich und die Lage der Nut 330 ist an die Lage der Auslassöffnungen angepasst. Liegen sich beispielsweise die beiden Auslassöffnungen diametral gegenüber, so erstreckt sich die Nut 330 über weniger als 180°. Weisen die Einlassöffnungen zusätzlich zum Umfangsabstand einen axialen Abstand auf, so kann sich die Nut 330 auch spiralig um den Mischkörper erstrecken.

Die Nut 330 führt in einen Auslass 309, der im Inneren des Mischkörpers 310 vorgesehen ist und der freien Stirnseite 312 austritt.

Fig. 8 zeigt ein weiteres Ausführungsbeispiel eines Mischkörpers 410 für eine erfindungsgemäße Mischvorrichtung, der ebenfalls mit einem Abdichtstopfen 415 und einem Betätigungsstab 414 versehen ist, und in ähnlicher Weise wie der Mischkörper 210 der Fig. 6 eingesetzt werden kann.

Der Mischkörper 410 ist ebenfalls zylindrisch ausgebildet und weist eine sich radial erstreckende, freie Stirnseite 412 auf. Vom Umfang des zylindrischen Mischkörpers 410 her erstrecken sich zwei Öffnungen 431, 432 bevorzugt radial in das Innere des Mischkörpers 410 hinein und führen zu einem Auslass 409, der an der freien Stirnseite 412 austritt. Die beiden Öffnungen 431, 432 sind in Umfangsrichtung mit einem Winkelabstand beabstandet, der an die Lage und Größe der Einlassöffnungen angepasst ist. Dieser Winkel ist so bemessen, dass ein Abdeckbereich B definiert wird, der in der Lage ist, eine der Einlassöffnungen abzudecken, während die andere Einlassöffnung mit einer der Öffnungen 431, 432 ausgerichtet ist, und der es gestattet, dass in einem Übergangsbereich jede der Öffnungen 431, 432 zumindest teilweise mit ihrer zugeordneten Einlassöffnung ausrichtbar ist.

In Abwandlung der beschriebenen und gezeichneten Ausführungsbeispiele kann jedes Zapfventil mit jeder Mischvorrichtung versehen sein. Die erfindungsgemäße Mischvorrichtung kann auch für andere Fluide, Flüssigkeiten oder Gase, unabhängig von einem Zapfventil, auf dem Lebensmittelsektor oder in anderen Gebieten eingesetzt werden. Wenn Druckunterschiede in den Fluiden kein Problem darstellen, kann der Mischkörper statt rotierend gedreht zu werden, zum Verstellen des Mischungsverhältnisses auch axial bewegbar sein. Wird der Mischkörper gedreht, so kann die Drehung nicht nur in einer Hin- und Herbewegung sondern fortlaufend in einer Richtung erfolgen, wenn dies für die Handhabung zweckmäßiger ist. Die Einlassöffnungen können in jeden beliebigen Abstand zueinander angeordnet sein. Auch der Auslass kann radial durch die Wandung erfolgen. Die Stirnseiten müssen nicht unbedingt geradlinig, eben verlaufen; vielmehr kann der Abdeckbereich auch durch eine oder mehrere gekrümmte bzw. gewellte Stirnseiten begrenzt werden, die verschiedene Winkel mit der Mittelinie einschließen.

## Patentansprüche

1. Mischvorrichtung (5, 105, 205) für Fluide, insbesondere für ein Getränke-Zapfventil (1, 100), wobei die Mischvorrichtung (5, 105, 205) eine Fluidkammer (9, 209) mit einer ersten Einlassöffnung (6a, 206a) für ein erstes Fluid und einer zweiten Einlassöffnung (7a, 207a) für ein zweites Fluid, einen zwischen der ersten und der zweiten Einlassöffnung (6a, 7a, 206a, 207a) in der Fluidkammer (9, 209) bewegbaren Mischkörper (10, 110, 210, 310, 410) und einen Auslass (9a, 209a) für Mischfluid enthält, wobei der Mischkörper (10, 110, 210, 310, 410) mit einem Abdeckbereich (B) für die erste und die zweite Einlassöffnung (6a, 7a, 206a, 207a) versehen ist und der Abdeckbereich (B) so ausgebildet ist, dass während einer ersten Bewegungsphase des Mischkörpers (10, 110, 210, 310, 410) die erste Einlassöffnung (6a, 206a) zunehmend abgedeckt und die zweite Einlassöffnung (7a, 207a) zunehmend geöffnet und während einer zweiten Bewegungsphase des Mischkörpers (10, 110, 210, 310, 410) die erste Einlassöffnung (6a, 206a) zunehmend geöffnet und die zweite Einlassöffnung (7a, 207) zunehmend abgedeckt wird.

2. Mischvorrichtung nach Anspruch 1, **dadurch gekennzeichnet, dass** der Mischkörper (10, 110, 210, 310, 410) zylindrisch mit wenigstens einer freien Stirnseite (12, 13, 112, 113, 212, 312, 412) ausgebildet und der Abdeckbereich (B) an seinem Umfang benachbart der freien Stirnseite (12, 13, 112, 113, 212, 312, 412) angeordnet ist.

3. Mischvorrichtung nach Anspruch 1 oder 2, **dadurch gekennzeichnet, dass** der Mischkörper (10, 110, 210, 310, 410) um seine Mittellinie (8a, 108a, 208a) verdrehbar ist.

4. Mischvorrichtung nach einem der Ansprüche 1 bis 3, **dadurch gekennzeichnet, dass** die Fluidkammer (9, 209) von einer zylindrischen Wandung (8, 208) umgeben ist, in die von einer mit einer Einsatzöffnung versehenen Stirnseite her der Mischkörper (10, 110, 210, 310, 410) lösbar einsetzbar ist.

5. Mischvorrichtung nach einem der Ansprüche 1 bis 4, **dadurch gekennzeichnet, dass** der Abdeckbereich (B) durch eine unter einem Winkel (α) schräg zur Mittellinie (8a, 108a, 208a) eines zylindrischen Mischkörpers verlaufende, ebene oder gewellte Stirnseite (12, 13, 112, 113, 212, 312, 412) begrenzt ist.

6. Mischvorrichtung nach einem der Ansprüche 1 bis 5, **dadurch gekennzeichnet, dass** der Mischkörper (10, 110, 210, 310, 410) durch einen Befestigungsstift (14, 214, 314, 414) gehalten ist, mit dem eine Abdichtung (15, 215, 315, 415) für eine Einsatzöffnung in der Fluidkammer (9) und ein Anschlag (15, 215, 315, 415) zum Positionieren des Mischkörpers (10, 110, 210, 310, 410) bezüglich der Einlassöffnungen (6a, 7a) verbunden ist.

7. Mischvorrichtung nach einem der Ansprüche 1 bis 6, **dadurch gekennzeichnet, dass** der Auslass (9) durch den Mischkörper (10, 110, 310, 410) führt.

8. Mischvorrichtung nach einem der Ansprüche 1 bis 7, **dadurch gekennzeichnet, dass** die erste und die zweite Einlassöffnung (6a, 7a) in einem axialen Abstand (a) zueinander in die Fluidkammer (9) einmünden, dass der Mischkörper (10, 110) in diesem Abstand (a) bewegbar angeordnet ist und zwei an entgegengesetzten Stirnseiten des Mischkörpers (10, 110) vorgesehene Abdeckbereiche (B) aufweist.

9. Mischvorrichtung nach einem der Ansprüche 1 bis 7, **dadurch gekennzeichnet, dass** die ersten und zweiten Einlassöffnungen (206a, 207a) mit einem Umfangsabstand in die Fluidkammer (209) einmünden, und dass der Mischkörper (210, 310, 410) in diesem Abstand bewegbar angeordnet und mit einem Abdeckbereich (B) zum abwechselnden Abdecken und Freigeben der ersten und zweiten Einlassöffnungen (206a, 207a) versehen ist.

10. Mischvorrichtung nach Anspruch 9, **dadurch gekennzeichnet, dass** sich die ersten und zweiten Einlassöffnungen (206a, 207a) diametral gegenüber liegen.

11. Mischvorrichtung nach Anspruch 9 oder 10, **dadurch gekennzeichnet, dass** die ersten und zweiten Einlassöffnungen (206a, 207a) jeweils mit einem Rückschlagventil versehen ist.

12. Mischvorrichtung nach einem der Ansprüche 9 bis 11, **dadurch gekennzeichnet, dass** der Mischkörper (210) als Zylinderkörper mit einer geschlossenen Stirnfläche (212) ausgebildet ist.

13. Mischvorrichtung nach einem der Ansprüche 9 bis 11, **dadurch gekennzeichnet, dass** der Abdeckbereich (B) durch eine sich über einen vorbestimmten Winkel in Umfangsrichtung um den Mischkörper (310) erstreckende Nut (330) begrenzt ist, die in der Nähe der freien Stirnseite (312) angeordnet ist und in einen an der Stirnseite (312) ausmündenden Auslass (309) führt.

14. Mischvorrichtung nach einem der Ansprüche 9 bis 11, **dadurch gekennzeichnet, dass** der Abdeckbereich (B) durch zwei über einen vorbestimmten Winkel in Umfangsrichtung um den Mischkörper (410) beabstandete Öffnungen (431, 432) begrenzt ist, die in der Nähe der freien Stirnseite (412) angeordnet sind und in einen an der Stirnseite (412) ausmündenden Auslass (409) führen.

15. Zapfventil (1, 100) mit einem Gehäuse (2), das eine Absperrarmatur und eine Mischvorrichtung (5, 105, 205) nach einem der Ansprüche 1 bis 14 enthält, wobei ein von außerhalb des Gehäuses (2) zugänglicher Handgriff (11, 4) zum Bewegen des Mischkörpers (10, 110, 210, 310, 410) vorgesehen ist.

16. Zapfventil nach Anspruch 15, **dadurch gekennzeichnet, dass** der Handgriff (4) zum Bewegen des Mischkörpers (110, 210, 310, 410) als Zapfhebel ausgebildet ist, der um eine Mittelachse (108a, 208a) des Mischkörpers (110, 210, 310, 410) verschwenkbar ist.
